# EUROPEAN PATENT APPLICATION

(11) **EP 1 519 475 A1**
(43) Date of publication of application: **30.03.2005**
(21) Application number: 03021511.5
(22) Date of filing: 24.09.2003
(51) Int. Cl.: H02M 3/335, H02M 3/158

(54) **A soft switching power converter with clamp**

(71) Applicant: Asian Power Devices Inc., Taoyuan City, Taoyuan Hsien (TW)
(72) Inventor: Chen, Jau-An, Taoyuan City Taoyuan Hsien (TW)
(74) Representative: Patentanwälte Hauck, Graalfs, Wehnert, Döring, Siemons, Schildberg

(57) **Abstract**

A soft switching clamp is disclosed, wherein the soft switching converter circuit is installable on power switches (10) of a PWM converter to suppress EMI and switching loss. The soft switching clamp employs a clamping circuit having a capacitor (32). When the power switches (10) of the power converter are turned off, energy from the circuit is received and stored in the capacitor (32). When the switches are turned on again, the stored energy is fed back to the power input or output. Since the stored energy in the capacitor (32) will not be released through the closed switch, the stored energy can be recovered, whilst EMI and switching loss can be considerably reduced.

## Description

### 1. Field of the Invention

The present invention relates to a soft switching clamp, in particular to an application of soft-switching converter circuit to a PWM converter to recover ringing energy and suppress EMI when the switches of the power converter is turned off, and also do not increase switching loss when the switches are turned back on.

### 2. Description of Related Arts

For conventional PWM converters, when the switches are being turned off, the drastic change of voltage on the switches of the power converter often causes electromagnetic interference (EMI). A PWM converter typically use the power metal-oxide semiconductor field-effect transistors (MOSFETs) as switch. The common practice to reduce EMI level is to install a clamping capacitor between the drain and the source of the switch to moderate the rate of change of voltage, and suppress EMI.

But with the addition of the clamping capacitor, when the switches are turned off, the clamping capacitor is charged to a high voltage. When the switches are turned on again, the stored energy in the clamping capacitor is discharged through the closed switch, resulting in switching loss and lowering of the efficiency of the power converter.

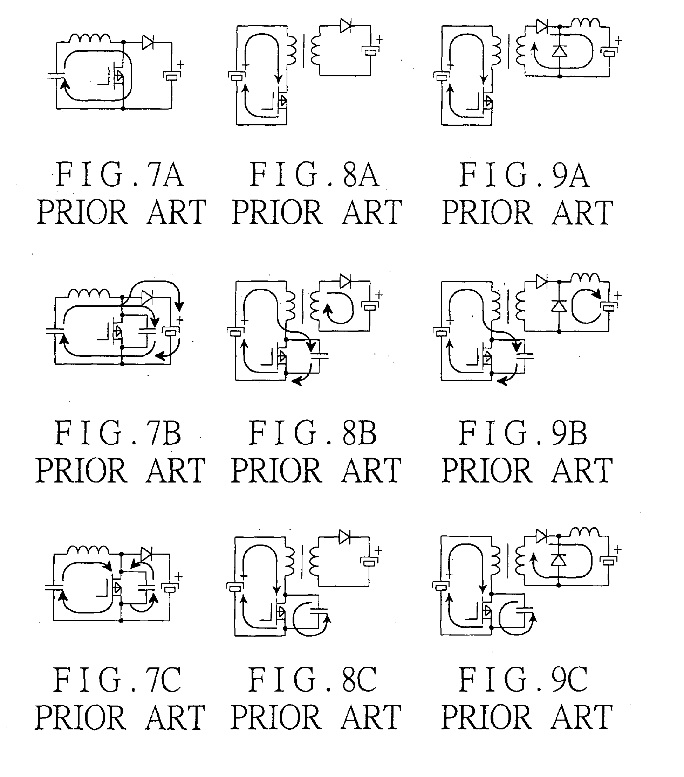

The circuit action of a conventional boost converter shown in Figs. 7A-7C is to be described below.

When the switches are first turned on, in Fig. 7A, current passes through the closed switch (for simplicity in the illustration, the clamping capacitor connected to the switch is omitted). When the switches are being switched off, as shown in Fig. 7B, the current is redirected from the switch to the clamping capacitor connected in shunt. When the switches are turned on again, as shown in Fig. 7C, the stored energy in the clamping capacitor is released through the closed switch; therefore the operation of the switches will cause unnecessary switching loss.

For flyback converters as shown in Figs 8A-8C and forward converters as shown in Fig. 9A-9C, the same situation is encountered as described above for the boost converter, so their operation will not be stated here. The conclusion is that, no matter what type of power converter, most power converters are faced with switching loss during operation. How to correct the above deficiency is the subject for discussion in the present invention.

The main object of the present invention is to provide a soft switching clamp installable on power switches of a power converter, that not only can moderate the rate of change of voltage when the power switches of the power converter are turned off, but are also do not increase the switching loss when the power switches are turned back on.

To this end, the instrumentalities of the present invention to create the soft switching clamp comprising:
a PWM driver circuit for generating a first and a second drive signal, where the first drive signal is used to control the operation duty cycle of power switches; and the second drive signal is to control the operation duty cycle of a reset switch, as described later;
a reset switch, which is connected to the capacitor through a second inductor, where the operation duty cycle of the reset switch is controlled by the second drive signal;
a capacitor, which is connected to the above reset switch through a second inductor, and is also connected to the power switch of the above power converter through the first diode.

When the power switch is turned off, the capacitor accumulates energy through the existing path of the first diode. When the power switch is turned on again, as the first diode is reverse biased, and the stored energy is released through the circuit made up by the second inductor, the reset switch and the second diode. When the power switch is again turned off, as the capacitor is charged through the first diode, the voltage of the power switch will be increased moderately, thus being able to suppress EMI.

The features and structure of the present invention will be more clearly understood when taken in conjunction with the accompanying drawings.
In the drawings:
Fig. 1 is one implementation of the boost converter for the present invention;
Fig. 2 is another implementation of the boost converter for the present invention;
Fig. 3 is a waveform diagram of the two drive signals;
Fig. 4 is a timing diagram of the two drive signal and drain to source voltage waveform of the power switch and reset switch;
Fig. 5 is the schematics of an implementation on a forward converter;
Fig. 6 is the schematics of an implementation on a flyback converter;
Figs. 7A-7C depict the circuit actions of a switch of a conventional boost converter;
Figs. 8A-8C depict the circuit actions of a switch of a conventional flyback converter, and
Figs. 9A-9C depict the circuit actions of a switch of a conventional forward converter.

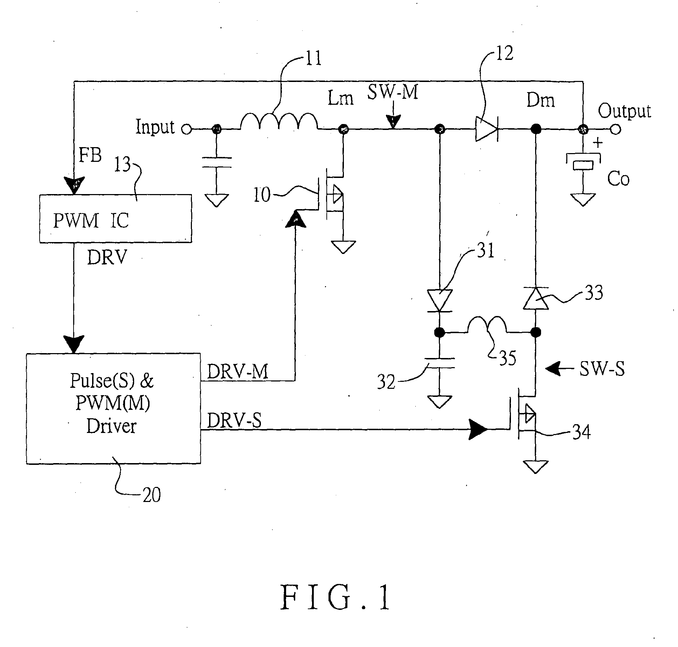

The present invention provides a soft switching clamp installable on the power switches of a PWM converter to recover ringing energy and suppress EMI. An implementation of the present invention on a boost converter is demonstrated in Fig. 1, where the structure of the power converter, in accordance with the present invention, includes a power switch (10) (only one is shown for simplicity of illustration, although actually there is maybe more than one power switch in a power converter), a PWM drive circuit (20), and a clamping circuit formed by a first diode (31), a capacitor (32), a second diode (33), a reset switch (34), and a second inductor (35).

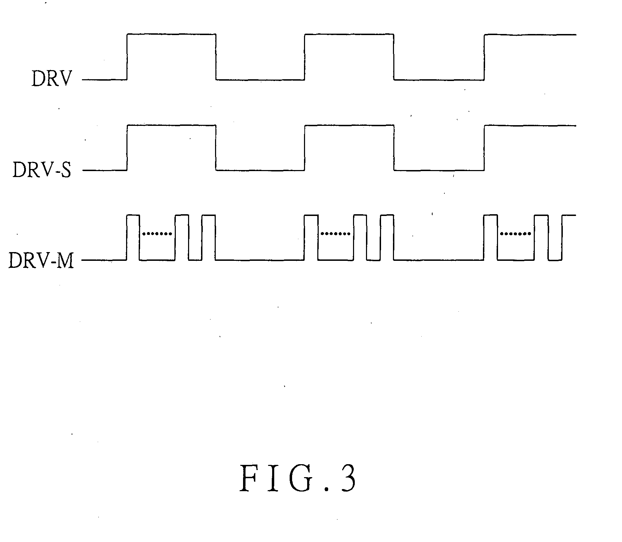

The source terminal of the power switch is grounded, and the drain terminal is connected to the input voltage through the first inductor (11), and at the same time, the drain terminal of the power switch is also connected to the output voltage through an output diode (12). The output voltage feeds back a control signal to a PWM controller (13) for control the output voltage. Meanwhile, the PWM controller (13) generate a PWM signal to the PWM driver circuit (20) to generate two drive signals (DRV-M) (DRV-S), wherein the first drive signal (DRV-M) is used to control the power switch (10) and the second drive signal (DRV-S) is used to drive the reset switch (34) (the waveform diagram of the two drive signals (DRV-M) (DRV-S) generated by the PWM driver circuit (20) is shown in Fig. 3).

The present invention creates a clamping circuit to replace the conventional clamping capacitor parallel connected between the drain and source terminals of the power switch (10) of a power converter, supported by the following components during operation of the power switch (10):
a capacitor (32) for accumulating energy when the power switch is turn off;
a first diode (31), wherein the positive end is connected to the drain terminal of the power switch (10), and the negative end is connected to a capacitor (32);
a second diode (33), wherein the negative end is connected to the power output, and the positive end is connected to the drain terminal of a reset switch (34) , (in the present example the reset switch is a MOSFET), where the gate terminal is controlled by the second drive signal (DRV-S) , and the source terminal is grounded; and
a second inductor (35) being connected between the capacitor (32) and the drain terminal of the reset switch (34).

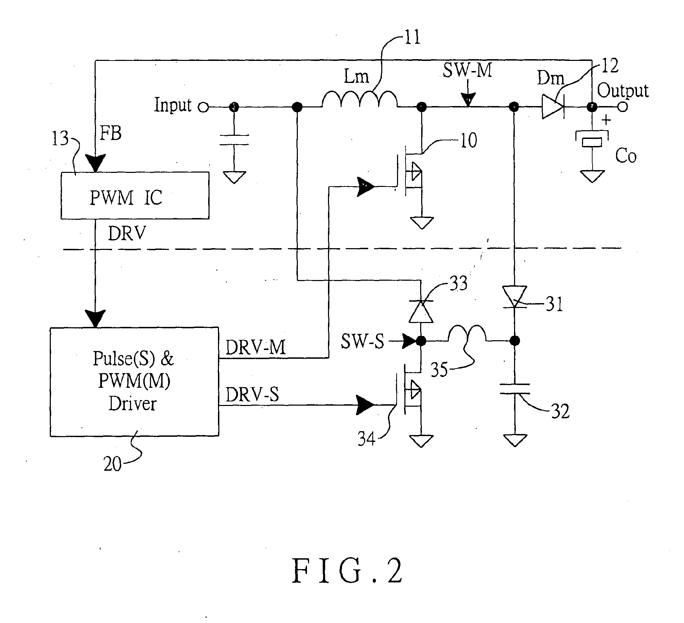

The above circuit is implemented by one preferred embodiment of the present invention. Alternatively, in another embodiment shown in Fig. 2, the second diode (33) can be connected to the power input instead of the power output, whilst other connections remain the same as in the previous example.

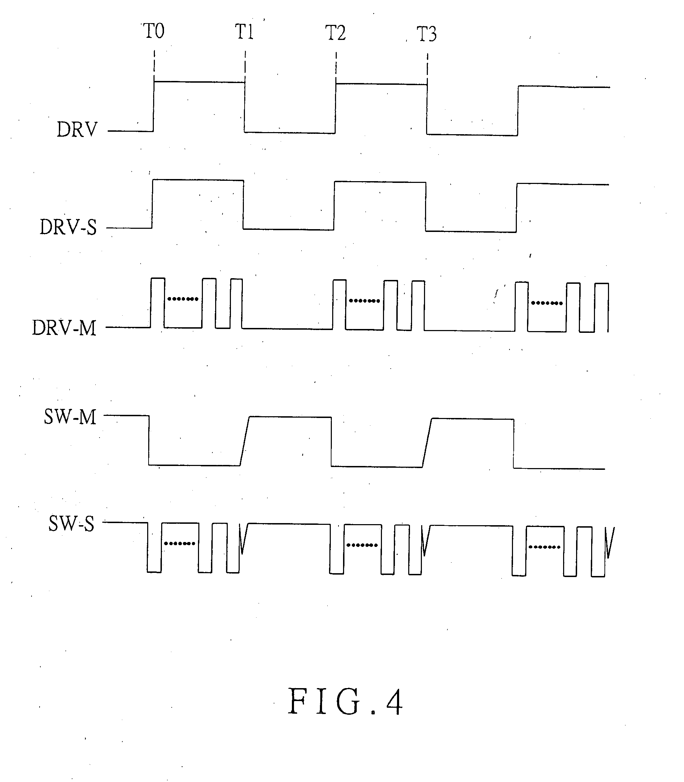

It needs to be emphasized that in the conventional technique only one drive signal is used to control the power switch (10), but in the present invention, two drive signals (DRV-M) (DRV-S) are used to control the power switch (10) and the reset switch (34). The waveform diagram of the two drive signals (DRV-M) (DRV-S) generated by the PWM driver circuit (20) is shown in Fig. 3. The first drive signal (DRV-M) controlling the power switch (10) is either in step with the output signal of the PWM controller (13) or obtained directly from the output of the PWM controller (13). The second drive signal (DRV-S) uses one or more pulse signals, when the first drive signal (DRV-M) is enabled, to drive the reset switch (34). The control signals in Fig. 4 are used to drive the power converter in the first embodiment of the invention. Their circuit actions can be analyzed in stages in the order of time sequence. For simplicity in the illustration, the parasitic capacitance of the both switches (10) is largely ignored.

Before the PWM controller (13) is triggered (before T0), the power switch (10) and the reset switch (34) are both turned off, and the input voltage through the first inductor (11) and the first diode (31) is used to charge the capacitor (32), until the voltage reaches the same level as the input voltage.

When the power switch (10) is turned on during T0-T1, since the drain terminal is short to the source terminal of the power switch (10), the first diode (31) becomes reverse biased, and therefore the stored energy in the capacitor (32) will not be discharged through the first diode (31).

When the reset switch (34) is turned on, a boost circuit is formed by the reset switch (34), the second inductor (35), and the second diode (33), which causes the stored energy in the capacitor (32) to be transferred to the voltage output, and the voltage of the capacitor (32) drops to a certain value.

When the power switch (10) is turned off (T1-T2), the voltage variation on the drain terminal produces energy with the first inductor (11) and the capacitor (32). This resonant frequency slowly charges the capacitor (32) until the voltage of the capacitor (32) reaches the same level as the output voltage, thus the EMI can be eliminated.

When the reset switch (34) is turned off: the boost circuit formed by the reset switch (34), the second inductor (35), and the second diode (33) will stop the circuit operation.

During T2-T3, the actions previously taken during T0-T1 will be repeated here.

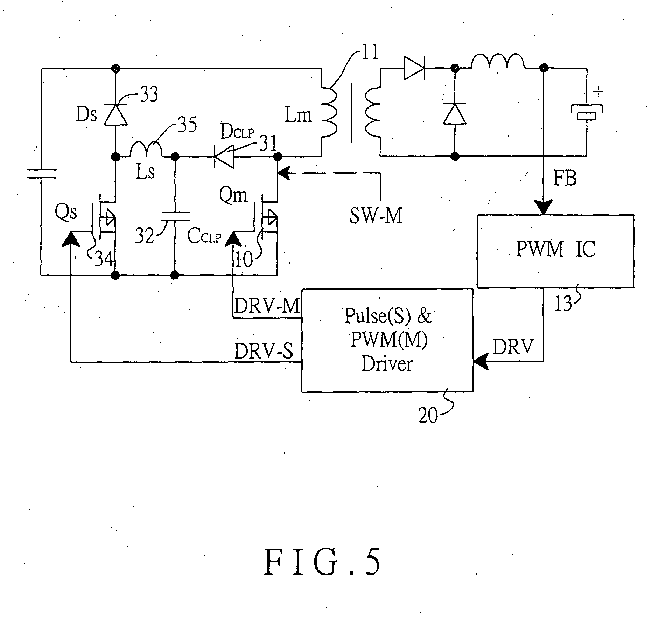

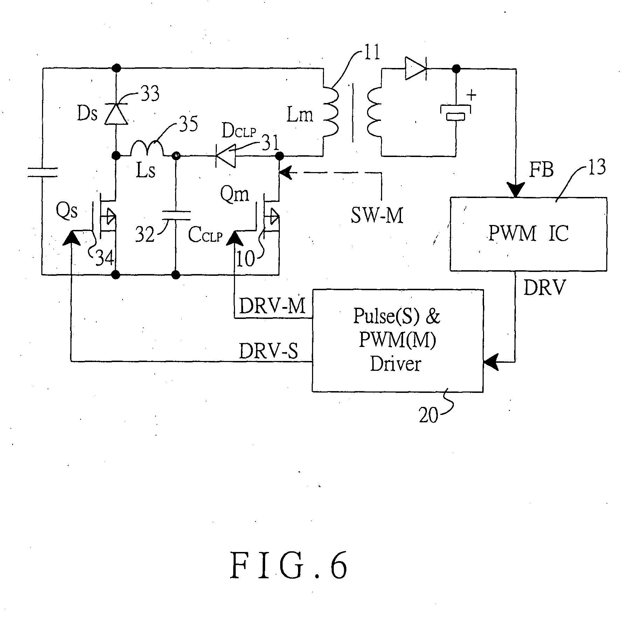

The above illustration explains the operation of the clamping circuit as implemented by the first embodiment. If the circuit is modified as in Fig. 2, the only difference in circuit action is that stored energy in the capacitor (32) is fed back to the power input instead of the power output. The present invention is not only applicable to boost converters, but is also suitable for forward converters and flyback converters, as shown by the different implementations in Figs. 5, 6.

In summary, the present design is not only able to moderate the rate of change of voltage when the switches are turned off, it can also reverse recover the energy of the capacitor to the power input or power output. Furthermore, the present design does not increase switching loss for a power converter when the power switches are turned on again.

The foregoing description of the preferred embodiments of the present invention is intended to be illustrative only and, under no circumstances, should the scope of the present invention be so restricted.

## Claims

1. A soft switching clamp installable on power switches of a power converter, where the soft switching clampcomprises:
a PWM driver circuit (20) for generating a first drive signal and a second drive signal, wherein the first drive signal is used to control the operation duty cycle of the power switch, and the second drive signal to control the operation duty cycle of reset switch;
a clamping circuit having a capacitor (32), a reset switch (34), and a second inductor (35);
wherein the reset switch (34) has one end connected to the capacitor (32) through a second inductor (35), and the second drive signal controls the operation duty cycle of the reset switch (34);
the capacitor (32) has one end connected to the reset switch (34) through the second inductor (35), and the capacitor (32) is also connected to the power switch (10) through the first diode (31);
such that when the power switches of the power converter are turned on, the stored energy in the capacitor (32) can be transferred to the power output or input at the same time.

2. The soft switching clamp as claimed in claim 1, wherein the soft switching clamp further includes:
a first diode (31), wherein the positive end is connected to the power switch (10), and the negative end is connected to the capacitor (32);
a second diode (33), wherein the negative end is connected to the power output, and the positive end is connected to the reset switch (34);
wherein the second inductor (35) is connected between the negative end of the first diode (31) and the positive end of the second diode (33).

3. The soft switching clamp as claimed in claim 1, wherein the soft switching clamp further includes:
a first diode (31), wherein the positive end is connected to the power switch (10), and the negative end is connected to the capacitor (32);
a second diode (33), wherein the negative end is connected to the power input, and the positive end is connected to the reset switch (34);
wherein the second inductor (35) is connected between the negative end of the first diode (31) and the positive end of the second diode (33).

4. The soft switching clamp as claimed in claim 2, wherein the reset switch (34) is a power MOSFET, wherein the gate terminal is controlled by the second drive signal, the drain terminal is connected to the positive end of the second diode (33), and the source terminal is grounded;
the power switch (10) is a power MOSFET, wherein the gate terminal is controlled by the first drive signal, the drain terminal is connected to the first inductor (11), and the source terminal is grounded.

5. The soft switching clamp as claimed in claim 3, wherein the reset switch (34) is a power MOSFET, wherein the gate terminal is controlled by the second drive signal, the drain terminal is connected to the positive end of the second diode (33), and the source terminal is grounded;
the power switch (10) is a power MOSFET as an example, wherein the gate terminal is controlled by the first drive signal, the drain terminal is connected to the first inductor (11), and the source terminal is grounded.

6. The soft switching clamp as claimed in claim 4, wherein when the first drive signal is enabled, one or more pulse signals are used to drive the reset switch (34).

7. The soft switching clamp as claimed in claim 5, wherein when the first drive signal is enabled, one or more pulse signals are used to drive the reset switch (34).

8. The soft switching clamp as claimed in claim 6, wherein the soft switching clamp is applied to a boost converter.

9. The soft switching clamp as claimed in claim 6, wherein the soft switching clamp is applied to a flyback converter.

10. The soft switching clamp as claimed in claim 6, wherein the soft switching clamp is applied to a forward converter.
